# EUROPÄISCHE PATENTANMELDUNG

(11) **EP 4 181 240 A1**
(43) Veröffentlichungstag der Anmeldung: **17.05.2023**
(21) Anmeldenummer: 21208557.5
(22) Anmeldetag: 16.11.2021
(51) Int. Cl.: H01M 4/86, C25B 11/04, C25B 1/04, H01M 8/1039, H01M 8/10

(54) **ABSTIMMUNG VON FORMULIERUNGEN AUF BASIS ANIONENLEITFÄHIGER POLYMERE (IONOMERE) ZUR HERSTELLUNG VON ELEKTROCHEMISCH AKTIVEN SCHICHTEN**

(71) Anmelder: Evonik Operations GmbH, 45128 Essen (DE)
(72) Erfinder: BOROWSKI, Patrick, 46238 Bottrop (DE); MALJUSCH, Artjom, 44866 Bochum (DE); ELKEMANN, Ines, 48653 Coesfeld (DE); ROTERS, Philipp, 48653 Coesfeld (DE)
(74) Vertreter: Evonik Patent Association

(57) **Zusammenfassung**

Die Erfindung betrifft die Herstellung eines elektrochemisch aktiven Schichtkörpers, einen elektrochemisch aktiven Schichtkörper, der insbesondere durch das Herstellungsverfahren erhalten ist, sowie eine Elektrochemische Zelle, die mindestens einen solchen Schichtkörper enthält. Außerdem betrifft die Erfindung eine Dispersion, die zur Herstellung des Schichtkörpers bestimmt ist. Ihr lag die Aufgabe zu Grunde, alternative lonomere zur Herstellung von elektrochemisch aktiven Schichtkörpern nutzbar zu machen. Die Erfindung beruht auf dem Konzept, ein lonomer in einer Dispersion zu verarbeiten und mit dieser Dispersion katalytisch aktive Schichtkörper für elektrochemische Zellen herzustellen.

## Beschreibung

Die Erfindung betrifft eine Dispersion, die zur Herstellung eines elektochemisch aktiven Schichtkörpers bestimmt ist. Ferne betrifft sie die Herstellung eines elektrochemisch aktiven Schichtkörpers, im Rahmen dessen die erfinderische Dispersion bereitgestellt wird. Außerdem betrifft sie einen elektrochemisch aktiven Schichtkörper, der insbesondere durch das Herstellungsverfahren erhalten ist, sowie eine Elektrochemische Zelle, die mindestens einen solchen Schichtkörper enthält. Außerdem betrifft die Erfindung ein Verfahren zur Herstellung von Wasserstoff und Sauerstoff durch Spaltung von Wasser, bei der die elektrochemische Zelle verwendet wird.

Elektrochemische Zellen sind technische Einrichtungen, in denen elektrochemische Prozesse durchgeführt werden. Sie umfassen in der Regel eine Anode, eine Kathode und ein zwischen Anode und Kathode angeordneten Separator, der die elektrochemische Zelle in zwei Kompartimente unterteilt. Beispiele für elektrochemische Zellen sind Batterien, Brennstoffzellen und Elektrolysezellen. In Elektrolysezellen wird Elektrolyse betrieben, also die Auftrennung oder das Knüpfen von chemischen Bindungen mit Hilfe von elektrischer Energie.

Eine bedeutende Elektrolyse ist die Wasserelektrolyse, bei der Wasser in Sauerstoff und Wasserstoff gespalten wird. Der Separator einer Wasserelektrolysezelle kann als ionenleitende Membran ausgeführt sein. Unterschieden werden dabei anionenleitende Membranen (anion exchange membranes - AEM) und protonenleitende Membranen (proton exchange membranes - PEM). Die Wasserspaltung mit Hilfe von anionenleintenden Membranen wird oft AEM-WE (engl. anion exchange membrane water electrolysis) abgekürzt oder auch alkalische Membran-Wasserelektrolyse genannt. Die altbekannte alkalische Wasserelektrolyse mit einem porösen Diaphragma ist keine AEM-WE im heutigen Sinne, weil das Diaphragma fluidleitend ist. Die Membran einer AEM-WE ist indessen fluidisch dicht. Die Anionenleitung erfolgt auf Ebene der Ionen.

Einen hervorragenden Überblick über Aufbau und Werkstoffe der gegenwärtig in der AEM-WE eingesetzten elektrochemischen Zellen bieten:
Miller, Hamish Andrew et al: Green hydrogen from anion exchange membrane water electrolysis: a review of recent developments in critical materials and operating conditions. Sustainable Energy Fuels, 2020, 4, 2114 DOI: 10.1039/c9se01240k

In elektrochemischen Prozessen finden Stoffumsätze an der Oberfläche von Elektrokatalysatoren statt. Zur Erzeugung einer hohen katalytisch aktiven Oberfläche sowie zur Ermöglichung von Stofftransporten werden Elektrokatalysatoren in porösen, elektrisch leitfähigen Schichten verwendet. Die Schichten werden auf andere Bauelemente der elektrochemischen Zelle aufgetragen oder als separates Bauteil eingesetzt. Allgemein soll hier von elektrochemisch aktiven Schichtkörpern die Rede sein, unabhängig davon, ob der Schichtkörper neben der Katalyse noch weitere Funktionen innerhalb der Zelle erfüllt.

Auf dem Gebiet der Wasserelektrolysezellen ist es üblich, Membranen mit elektrokatalytisch aktivem Material zu beschichten, sodass eine "catalyst coated membrane" (CCM) erhalten wird; vgl. Miller et al. Sect. 5.2. Eine solche CCM ist ein erstes Beispiel für einen elektrochemisch aktiven Schichtkörper.

Ein anderes Beispiel für einen elektrochemisch aktiven Schichtkörper kann eine Elektrode sein, bei der ein elektrisch leitfähiges Substrat mit elektrokatalytisch aktivem Material beschichtet wird, sodass ein "catalyst coated substrate" (CCS) erhalten wird; vgl. Miller et al. Sect. 5.1. Ein solches CCS ist ein zweites Beispiel für einen elektrochemisch aktiven Schichtkörper.

Die Morphologie eines elektrochemisch aktiven Schichtkörpers wird durch die Katalysatorpartikel und deren Anordnung in dem Schichtkörper bestimmt. Zur dauerhaft mechanischen Haftung der Katalysatorpartikel untereinander sowie an einem Trägermaterial eignen sich polymere Binderinsbesondere solche, die einen Ionentransport entsprechend der elektrochemischen Reaktion ermöglichen (ionenleitfähiges Polymer, oft auch als "Ionomer" bezeichnet).

Die Effizienz und Lebensdauer von elektrochemisch aktiven Schichtkörpern werden insbesondere durch Auswahl sowie Abstimmung der einzelnen Komponenten und deren Verarbeitung bestimmt. Dabei entscheidend ist bereits die Herstellung geeigneter Katalysator-Ionomer-Formulierungen.

In der wissenschaftlichen Literatur sind bereits einige Katalysator-Ionomer-Formulierungen sowie zugehörige Verfahren zur Herstellung von elektrochemisch aktiven Schichtkörpern bekannt:
So beschreiben Chen et al. die Herstellung von CCMs für Brennstoffzellen auf Basis des lonomers Poly(fluorenyl aryl piperidinium):
Chen, N., Wang, H.H., Kim, S.P. et al. Poly(fluorenyl aryl piperidinium) membranes and ionomers for anion exchange membrane fuel cells. Nat Commun 12, 2367 (2021). DOI 10.1038/s41467-021-22612-3

Park et al. beschichten eine anionenleitfähige Membran der Fa. Fumatech (FUMATECH BWT GmbH, Bietigheim-Bissingen, Deutschland) mit einem Gemisch aus Iridiumoxid und Platin/Kohlenstoff, um eine CCM für eine Wasserelektrolysezelle zu erhalten:
Ji Eun Park, Sun Young Kang, Seung-Hyeon Oh, et al. High-performance anion-exchange membrane water electrolysis, Electrochimica Acta, Volume 295, 2019, Pages 99-106, DOI 10.1016/j.electacta.2018.10.143

Als lonomer nutzten Park et al das Polymer FAA-3-Brder Fa. Fumatech (FUMATECH BWT GmbH, Bietigheim-Bissingen, Deutschland). Eine genaue Spezifikation des lonomers FAA-3-Br liefern Park et al. indes nicht.

Leng et al. stellten katalysatorbeschichtete Elektroden für eine alkalische Brennstoffzelle her, indem sie ein Kohlenstoffvlies mit einer Pt-haltigen Tinte bespritzten. Die Tinte enthielt eine Vorstufe eines Nafion-Ionomers. Das lonomer wurde erst auf dem Kohlenstoffvlies in-situ vernetzt:
Yongjun Leng, Lizhu Wang, Michael A. Hickner, et al., Alkaline membrane fuel cells with in-situ cross-linked ionomers, Electrochimica Acta, Volume 152, 2015, Pages 93-100, DOI 10.1016/j.electacta.2014.11.055

Aus der WO 2021/013694 A1 ist ein anionen leitendens Polymer mit einer Strukturformel (I) bekannt, das für die Herstellung von Membranen verwendet werden kann. Die Herstellung von CCMs, CCSs und anderen elektrochemisch aktiven Schichtkörpern ist darin nicht offenbart.

Die Herstellung von lonomere mit einer Strukturformel (II) ist in der zum Zeitpunkt dieser Anmeldung noch unveröffentlichten europäischen Anmeldung 21152487.1 beschrieben.

Die Herstellung von lonomere mit einer Strukturformel (III) ist in der zum Zeitpunkt dieser Anmeldung noch unveröffentlichten europäischen Anmeldung 21162711.2 beschrieben.

Der Erfindung lag die Aufgabe zu Grunde, anionenleitende Polymere als lonomere zur Herstellung von elektrochemisch aktiven Schichtkörpern nutzbar zu machen.

Gelöst wird diese Aufgabe jeweils durch eine Dispersion nach Anspruch 1, durch ein Verfahren zur Herstellung eines elektrochemisch aktiven Schichtkörpers nach Anspruch 7, durch den elektrochemisch aktiven Schichtkörper nach Anspruch 11 und 13, durch die elektrochemische Zellen nach Anspruch 14 und durch das Verfahren zur Herstellung von Wasserstoff und Sauerstoff nach Anspruch 15. Bevorzugte Ausführungsformen der Erfindung sind in den abhängigen Ansprüchen niedergelegt.

Alle diese Gegenstände beruhen auf dem einheitlichen Konzept, ein lonomer gemäß Strukturformel (I), (II) und (III) in Lösung zu bringen, in einer Dispersion zu verarbeiten und mit dieser Dispersion katalytisch aktive Schichtkörper für elektrochemische Zellen herzustellen. Alle die hier offenbarten Gegenstände bilden damit einen gemeinsamen erfinderischen Komplex.

Im Rahmen von Untersuchungen stellte sich heraus, dass sich diese Art von Polymeren (lonomere) insbesondere in Zusammenhang mit den nachfolgend abgestimmten Katalysatorlonomer-Formulierungen erfolgreich zu Katalysatorschichten prozessieren ließen, welche sich insbesondere für elektrochemische Prozesse eignen, bei denen der Transport von Anionen stattfindet. Besonders gut funktioniert dies in AEM-WE Prozessen. Die aus der hier beschriebenen Dispersion hergestellte Schichtkörper eignen sich daher insbesondere zum Einsatz als CCM oder CCS in alkalischen Wasserelektrolysen.

Der gemeinsame Vorteil der lonomere nach Strukturformel (I), (II) oder (III) ist ihre gute ionische Leitfähigkeit, hohe chemische sowie mechanische Beständigkeit im alkalischen Milieu und die geringen Synthesekosten.

Die zu der Dispersion verarbeiteten anionenleitende Polymere gehorchen der Strukturformel (I) oder (II) oder (III).

Das anionenleitende Polymer gemäß Strukturformel (I) ist wie folgt definiert: 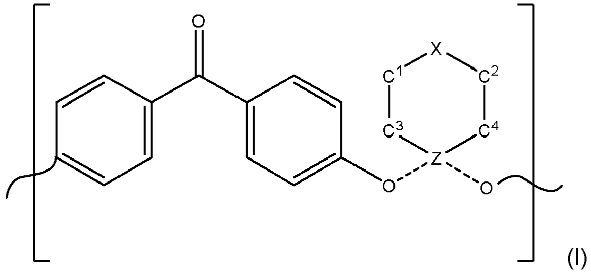 worin X für ein Strukturelement steht, umfassend ein positiv geladenes Stickstoffatom, welches an C¹ und C² gebunden ist und das über zwei Bindungen an ein oder zwei Kohlenwasserstoffreste gebunden ist, umfassend 1 bis 12, vorzugsweise 1 bis 6, besonders bevorzugt 1 oder 5 Kohlenstoffatome
und worin Z für ein Strukturelement steht, das ein Kohlenstoffatom umfasst, welches an C³ und C⁴ gebunden ist, und das mindestens einen aromatischen Sechsring umfasst, der direkt an eines der Sauerstoffatome gebunden ist, wobei die aromatischen Sechsringe durch ein oder mehrere Halogen- und/oder ein oder mehrere C₁- bis C₄-Alkylreste substituiert sein können.

Das anionenleitende Polymer gemäß Strukturformel (II) ist wie folgt definiert: 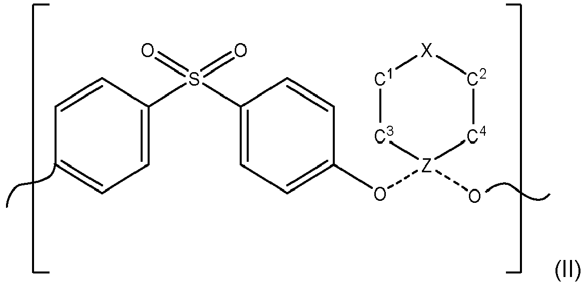 worin X für ein Strukturelement steht, umfassend ein positiv geladenes Stickstoffatom, welches an C¹ und C² gebunden ist und das über zwei Bindungen an ein oder zwei Kohlenwasserstoffreste gebunden ist, umfassend 1 bis 12, vorzugsweise 1 bis 6, besonders bevorzugt 1 oder 5 Kohlenstoffatome,
und worin Z für ein Strukturelement steht, das ein Kohlenstoffatom umfasst, welches an C³ und C⁴ gebunden ist, und das mindestens einen aromatischen Sechsring umfasst, der direkt an eines der Sauerstoffatome gebunden ist, wobei der aromatische Sechsring in den Postionen 3 und 5 mit derselben oder verschiedenen C₁- bis C₄-Alkylreste substituiert sein kann, insbesondere mit einer Methyl-, iso-Propyl- oder tert-Butyl-Gruppe, wobei die Methylgruppe bevorzugt ist.

Das anionenleitende Polymer gemäß Strukturformel (III) ist wie folgt definiert: 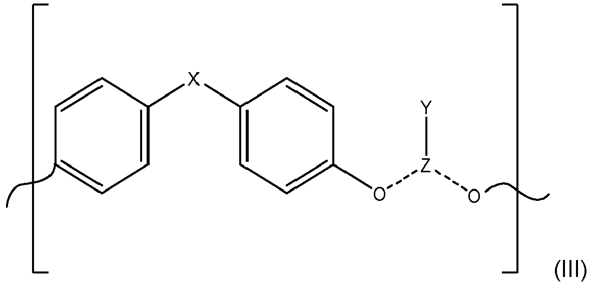 worin X für eine Keton- oder Sulfon-Gruppe steht;
worin Z für Strukturelement steht, welches mindestens ein tertiäres Kohlenstoffatom und mindestens einen aromatisches Sechsring umfasst, wobei der aromatische Sechsring mit einem der beiden Sauerstoffatome direkt verbunden ist;
worin Y für ein Strukturelement steht, welches mindesten ein Stickstoffatom mit positiver Ladung umfasst, wobei dieses Stickstoffatom mit dem Strukturelement Z verbunden ist.

Ein erster Gegenstand der Erfindung ist mithin eine Dispersion, welche zumindest die folgenden Komponenten enthält:
- eine Lösung eines anionenleitfähigen Polymers;
- Partikeln enthaltend mindestens eine elektrokatalytisch aktive Substanz;
- optional mindestens ein Dispersionsmittel;
bei der das anionenleitfähige Polymer mindestens eine Struktur enthält, welche ausgewählt ist aus der Gruppe bestehend aus den wie oben definierten Strukturformeln (I), (II) und (III).

Diese lonomere lassen sich besonders gut auflösen in Lösemittel aus der folgenden Gruppe: N-Methyl-2-pyrrolidon (NMP), N,N-Dimethylformamid (DMF), N,N-Dimethylacetamid (DMAC) oder Dimethylsulfoxid (DMSO). DMSO ist dabei bevorzugt. Das Lösemittel lässt sich durch Trocknung entfernen, sodass das lonomer als Feststoff in Form eines Polymerfilms zurückbleibt. Die Konzentration des anionenleitfähigen Polymers bezogen auf das Volumen des Lösemittels sollte zwischen 10 mg/ml und 500 mg/ml oder zwischen 50 mg/ml und 100 mg/ml betragen.

Die elektrolytische Aktivität des aus der Dispersion hergestellten Schichtkörpers wird durch Zugabe eines Elektrokatalysators in die Dispersion realisiert. Der Elektrokatalysator wird dann im späteren Schichtkörper durch das lonomer immobilisiert. Als Elektrokatalysator werden Partikel verwendet, die eine elektrokatalytisch aktive Substanz enthalten, welche ausgewählt ist aus der Gruppe bestehend aus Iridium (Ir), Iridiumoxid (IrOx), Nickeloxid (NiOx), Cobaltoxid (CoOx), Nickel-Eisen-Mischoxid (NiFeOx), Nickel-Cobalt-Mischoxid (NiCoOx), Blei-Ruthenium-Mischoxid (PbRuOx), Platin auf Kohlenstoff (Pt/C). Um eine effektive Dichte der katalytisch aktiven Zentren im Schichtkörper zu erzielen, wird das Massenverhältnis von anionenleitendem Polymer zu Partikel in der Dispersion zwischen 1:1 und 1:20 oder zwischen 1:1 und 1:5 oder zwischen 1:6 und 1:10 eingestellt.

Besonders bevorzugt wird ein anionenleitendes Polymer in der Dispersion verarbeitet, was durch mindestens eine der folgenden Strukturformeln (IVa) bis (IVd) beschrieben ist: 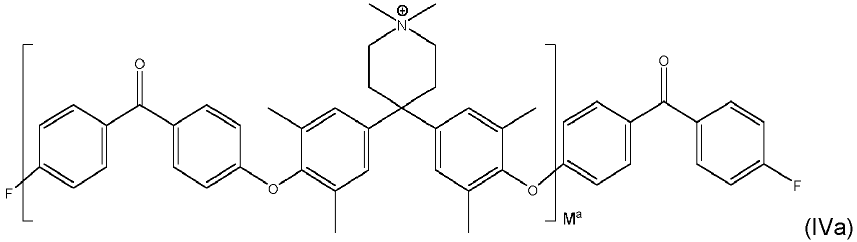 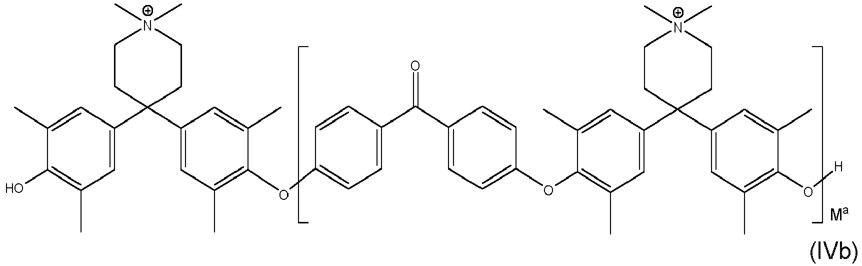 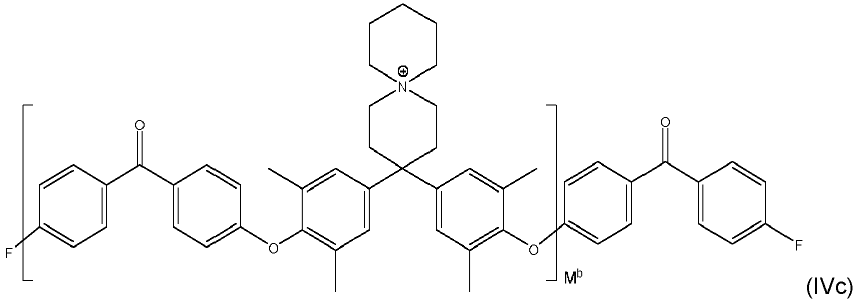 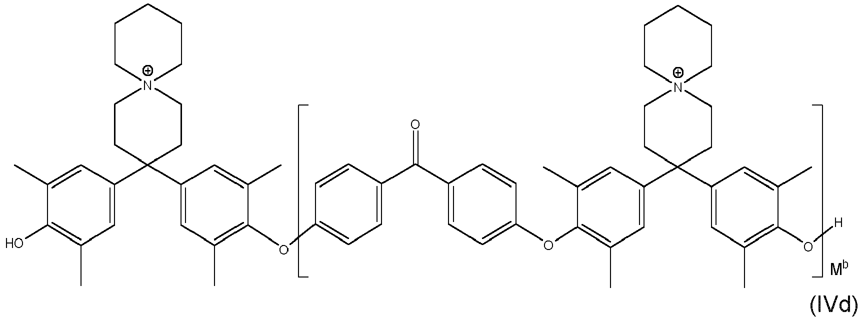 wobei M^{a} und M^{b} eine natürliche Zahl von 1 bis 500 oder von 5 bis 250 darstellen, und wobei die aromatischen Ringe weiter substituiert sein können mit einem oder mehr Halogenen und/oder mit einem oder mehreren C₁- to C₄- Alkyl-Resten, insbesondere mit Methyl-Resten.

Die Dispersion muss nicht zwingend ein gesondertes Dispersionsmittel enthalten. Unter Umständen kann das Lösemittel gleichzeitig die Funktion als Dispersionsmittel übernehmen. Um die Verarbeitbarkeit der Dispersion zu erhöhen, wird allerdings vorzugsweise mindestens ein Dispersionsmittel zugesetzt. Dadurch wird die Dispersion fließfähiger. Es kann auch ein Gemisch aus mehreren Dispersionsmitteln eingesetzt werden. Insbesondere hat es sich als vorteilhaft herausgestellt, wenn die Rezeptur der Dispersion zwei Dispersionsmittel enthält, nämlich Wasser und einen Alkohol, wobei das Volumenverhältnis des Wassers zu dem Alkohol zwischen 1:3 und 3:1 beträgt. Vorzugsweise werden Wasser und Alkohol im Verhältnis 1:1 eingesetzt. Als Alkohol eignen sich Ethanol, Methanol, 1-Propanol oder 2-Propanol. Ein solches Wasser/Alkoholgemisch verdampft beim Trocknen der Dispersion gut.

Um eine gute Verarbeitbarkeit zu gewährleisten, beträgt die Feststoffkonzentration der Dispersion vorzugsweise zwischen 5 mg/ml bis 100 mg/ml oder zwischen 10 mg/ml und 25 mg/ml, jeweils bezogen auf das Gesamtvolumen der flüssigen Bestandteile der Dispersion. Die in der Dispersion anwesenden Feststoffe entsprechen den katalytisch aktiven Partikeln. Das lonomer in der Lösung wird als flüssig angesehen.

Die hier beschriebene Dispersion ist dazu bestimmt einen elektrochemisch aktiven Schichtkörper herzustellen.

Ein weiterer Gegenstand der Erfindung ist daher ein Verfahren zur Herstellung eines elektrochemisch aktiven Schichtkörpers, umfassend die folgenden Schritte:
a) Bereitstellen einer erfindungsgemäßen Dispersion, welche zumindest die folgenden Komponenten enthält:
   - eine Lösung eines anionenleitfähigen Polymers;
   - Partikeln enthaltend mindestens eine elektrokatalytisch aktive Substanz;
b) Bereitstellen eines Substrats;
c) Auftragen der Dispersion auf das Substrat;
d) Trocknen der auf dem Substrat aufgetragenen Dispersion;
e) Erhalt eines Schichtkörpers, umfassend das Substrat und eine darauf aufgebrachte, zumindest zweiphasige Beschichtung, wobei die Beschichtung als erste Phase das anionenleitfähige Polymer und als zweite Phase die Partikel umfasst und wobei die zweite Phase in der ersten Phase dispergiert ist.

Das Lösemittel und das optional vorhandene Dispersionsmittel verdampft beim Trocknen, sodass es sich nicht im Schichtkörper wiederfindet.

Das Auftragen der Dispersion auf das Substrat erfolgt in bekannter Weise durch Rakeln, durch Sprühen oder durch Siebdruck.

Ein Vorteil der hier beschriebenen Dispersion besteht darin, dass sich mit ihr textile Substrate beschichten lassen. Elektrochemisch aktive Schichtkörper auf Basis einer textilen Struktur weisen eine besonders große Oberfläche auf und können daher eine hohe Prozessintensität ermöglichen. Vorzugsweise wird daher als Substrat ein textiles Flächengebilde verwendet. Textile Flächengebilde sind Vliese, Filze, Gewebe oder Gewirke. Die Flächengebilde sind aus Fasern, Fäden oder Garnen aufgebaut. Vorzugsweise werden Filze oder Vliese mit der Dispersion beschichtet, die aus Nickel-Fasern, Kohlenstoff-Fasern oder Stahl-Fasern aufgebaut sind. Derartige Substrate sind nämlich kostengünstig verfügbar, elektrisch leitend und im alkalischen Milieu eines AEM-WE-Prozesses stabil. Sie eignen sich daher als Elektrode in CCS Bauweise.

Mit der hier beschriebenen Dispersion kann auch eine Membran aus einem anionenleitenden Polymer beschichtet werden. Wird eine anionenleitende Membran als Substrat verwendet, handelt es sich bei dem erhaltenen Schichtkörper um eine CCM. Vorzugsweise enthält die als Substrat verwendete Membran ebenfalls lonomere nach Struktur (I) oder (II) oder (III). Dann lässt sich eine besonders gute Anbindung der Katalysatorpartikel an die Membran realiseren, weil die lonomere kompatibel sind.

Ein weiterer Gegenstand der Erfindung ist ein elektrochemisch aktiver Schichtkörper, umfassend ein Substrat und eine darauf aufgebrachte, zumindest zweiphasige Beschichtung, wobei die Beschichtung als erste Phase ein anionenleitfähiges Polymer und als zweite Phase Partikel enthaltend eine elektrokatalytisch aktive Substanz umfasst, und wobei die zweite Phase in der ersten Phase dispergiert ist, wobei das anionenleitfähige Polymer mindestens eine Struktur nach Formel (I), (II) oder (III) enthält. Abhängig von dem gewählten Substrat handelt es sich bei dem Schichtkörper insbesondere um eine CCM oder um ein CCS. In beiden Fällen liegt die Beladung bezogen auf die elektrochemisch aktive Substanz vorzugsweise zwischen 0,2 mg/cm² und 10 mg/cm² oder 0,4 mg/cm² und 2 mg/cm².

Besonders bevorzugt enthält der elektrochemisch aktive Schichtkörper ein anionenleitendes Polymer, das durch mindestens eine der folgenden Strukturformeln (IVa) bis (IVd) beschrieben ist: 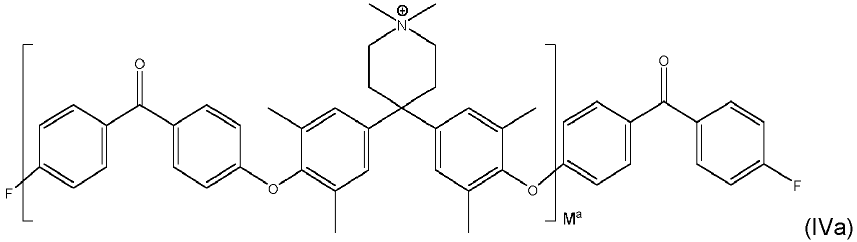 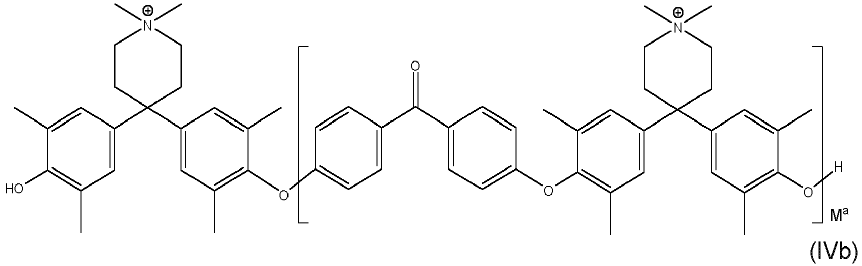 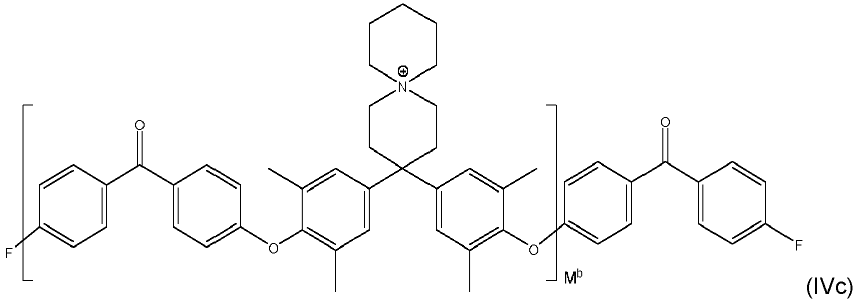 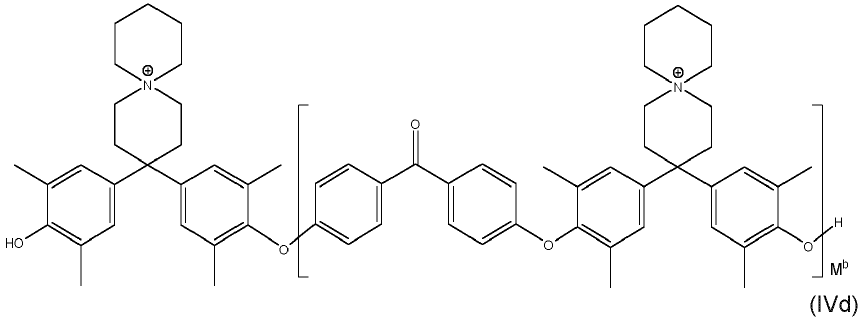 wobei M^{a} und M^{b} eine natürliche Zahl von 1 bis 500 darstellen, vorzugsweise von 5 bis 250 und wobei die aromatischen Ringe weiter substituiert sein können mit einem oder mehr Halogenen und/oder mit einem oder mehreren C₁- to C₄- Alkyl-Resten, insbsondere mit Methyl-Resten.

Derartige lonomere haben eine gute ionische Leitfähigkeit, hohe chemische sowie mechanische Beständigkeit im alkalischen Milieu und haben geringen Synthesekosten. Außerdem immobilisieren sie die Katalystorpartikel gut auf dem Substrat und lassen sich hervorragend in der Dispersion verarbeiten.

Je nach gewählter Rezeptur der Dispersion, der gewählten Auftragsmethode und Zeit/Temperaturregime des Trocknungsprozesses erhält die Beschichtung auf dem Substrat, genauer gesagt ihrere erste disperse Phase aus dem anionenleitenden Polymer eine spezielle Struktur, welche die Erreichbarkeit der katalytisch aktiven Zentren der Partikel in der Beschichtung für den Elektrolyten verbessert. Ein elektrochemisch aktiver Schichtkörper, welcher erhalten ist durch das erfindungsgemäße Beschichtungsverfahren, ist daher ebenfalls ein Gegenstand der Erfindung.

Der aus der Dispersion hergestellte, elektrochemisch aktive Schichtkörper lässt sich vorzüglich in einer Elektrochemischen Zelle einsetzen, etwa als CCM oder CCS. Die elektrochemische Zelle kann neben dem Schichtkörper noch weitere Komponenten umfassen, etwa andere Elektroden oder Separatoren, oder Fluidleiter oder Kontaktplatten.

Aufgrund der besonderen Beständigkeit des lonomers und der katalytischen Aktivität der Partikel, die in der Dispersion verarbeitet wurden und sich in dem Schichtkörper wieder finden, wird die den Schichtkörper enthaltende elektrochemische Zelle vorzugsweise zur Durchführung eines Verfahrens zur Herstellung von Wasserstoff und Sauerstoff durch elektrochemische Spaltung von Wasser verwendet, bei dem ein wässriger Elektrolyt mit einem pH-Wert von 7 bis 15 in die elektrochemische Zelle gefüllt wird. Eine solcher AEM-WE Prozess ist ebenfalls ein Gegenstand der Erfindung.

Die Erfindung soll nun anhand von Ausführungsbeispielen näher erläutert werden. Es zeigen:
- Figur 1:: Aufbau der elektrochemischen Zelle;
- Figur 2:: Teststand für die elektrochemischen Zelle;
- Figur 3:: Graphische Darstellung der Strom-Spannungs-Kurven.
Grundlage der Herstellung von Formulierungen mit oben beschriebenen Polymeren (lonomeren) ist die Herstellung einer lonomer-Lösung. Als Lösemittel eignen sich beispielsweise N-Methyl-2-pyrrolidon (NMP), N,N-Dimethylformamid (DMF), N,N-Dimethylacetamid (DMAC) oder Dimethylsulfoxid (DMSO), bevorzugt ist DMSO, da es als nicht-Gefahrstoff eingestuft ist. Der Anteil des Polymers liegt zwischen 10 mg/ml und 500 mg/ml oder zwischen 25 mg/ml und 200 mg/ml .

Das Massenverhältnis von lonomer zu katalytisch aktiver Substanz liegt zwischen 1:1 und 1:20 oder zwischen 1:3 und 1:5 bei Katalysatoren auf Basis von beispielsweise Platin geträgert auf Kohlenstoff (Pt/C), Iridium (Ir), Iridiumoxid (IrOx), Nickeloxid (NiOx), Cobaltoxid (CoOx), Nickel-Eisen-Mischoxid (NiFeOx), Nickel-Cobalt-Mischoxid (NiCoOx) oder Blei-Ruthenium-Mischoxid (PbRuOx).

Katalysator und lonomer-Lösung können zum einen nach Dispergieren (beispielsweise mit einem Dispergiergerät ULTRA-TURRAX^{®} von der Firma IKA, Staufen, DE oder einem Dreiwalzwerk bspw. von der Firma EXAKT, Norderstedt, DE - unter Schereinwirkung bewirkt beides die Einstellung der Partikelgröße (dso im Bereich zwischen 0,1 µm bis 50 µm) sowie einer Dispersion, - direkt appliziert werden (beispielsweise mittels Siebdruckes oder einem Rakelverfahren). Zum anderen können insbesondere für die Applikation in Sprühprozessen wässrige Dispersionen hergestellt werden, bei denen ein Katalysator zunächst in einer Lösung aus Wasser sowie niederen Alkoholen (vorzugsweise Ethanol, 1-Propanol oder 2-Propanol) unter Einwirkung von Ultraschall oder einem Dispergierer (beispielsweise mit einem Dispergiergerät ULTRA-TURRAX^{®} von der Firma IKA, Staufen, DE mit zusätzlicher Einstellung der Partikelgröße: d₅₀ im Bereich zwischen 0,1 µm bis 50 µm) dispergiert wird und dem anschließend die lonomer-Lösung (vorzugsweise 50 mg/ml) mit nachfolgend weiterem Dispergieren unter Ultraschall zugesetzt wird. Der Feststoffkonzentration hierbei liegt zwischen 5 mg/ml und 100 mg/ml, bevorzugt zwischen 10 mg/ml und 25 mg/ml. Die Einheit mg/ml der lonomer-Lösung bezieht sich auf Masse Polymer / Volumen Lösemittel bzw. der Dispersion auf Masse Katalysator / Volumen flüssiger Bestandteile.

Als Substrate für die Applikation der hergestellten Formulierungen eignen sich insbesondre Vliese aus Kohlenstoff bzw. Vliese aus Metall (Nickel, Edelstahl, Titan) sowie ionenleitende, polymere Membranen.

Die Beladung des Substrates bezogen auf den Katalysator liegt zwischen 0,2 mg/cm² und 10 mg/cm² oder 0,4 mg/cm² und 2 mg/cm².

Tabelle 1 zeigt die Zusammensetzung einiger erfindungsgemäßer Dispersionen, mit denen Katalysatorschichten auf Substrate aufgebracht werden konnten.

Bei dem verwendeten lonomer handelt es sich um eine Substanz hergestellt wie in Beispiel 3 der WO 2021/013694 A1 beschrieben.

Das lonomer wurde zunächst unter Rühren und Temperatur (60 °C) über 16 h in Dimethylsulfoxid gelöst. Anschließend wurden die Katalysatoren im Dispergiermittel, bestehend aus gleichen Volumenteilen Wasser und Ethanol, entweder unter Ultraschall (BRANSONICTM B-1200 E2 der Firma Branson Ultrasonics Corporation, Brookfield, CT, US) für 30 min im Eisbad und einer Leistung von 30 W oder mit einem Dispergiergerät ULTRA-TURRAX^{®} T10 basic (Firma IKA, Staufen, DE) für 3 min auf Stufe 3 dispergiert. Nach Zugabe der lonomerlösung erfolgt eine weitere Dispersion mittels Ultraschalls im Eisbad für 1 min bei einer Leistung von 30 W und einer Dispergierung mit einem Schüttler (MS1 Minishaker der Firma IKA, Staufen, DE) für 10 s bei 2500 rpm. Die Anteile wurden entsprechend Tabelle 1 gewählt.

Die erfindungsgemäßen Dispersionen wurde mit einem Ultraschallsprühbeschichter PRISM 400 (Fa. Ultrasonic Systems, Inc, Haverhill, MA, US) auf die Substrate gesprüht. Die Formulierung wird während des Prozesses stets gerührt. Diese Substrate wurden auf einer Temperatur von 60 °C gehalten, wodurch kontinuierlich das Dispergiermittel verdampfte, sodass die erfindungsgemäßen Schichtkörper hergestellt wurden.

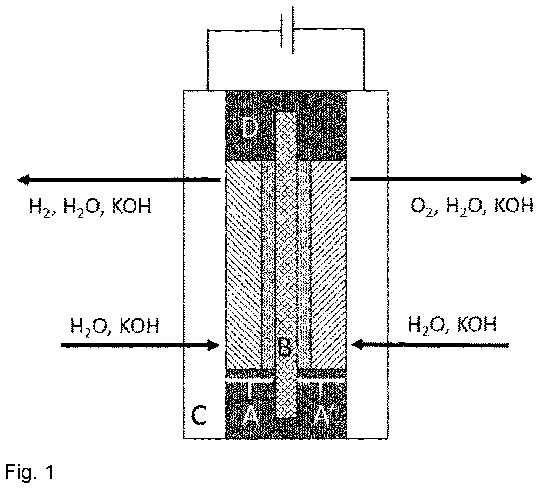

Die so erhaltenen Schichtkörper ließen sich verwenden als Elektroden zur Erzeugung von Wasserstoff und/oder Sauerstoff in der alkalischen Membran-Wasserelektrolyse (AEM-WE). Die elektrochemische Zelle gemäß Figur 1 bestand dabei im Wesentlichen aus zwei elektrisch aktiven Schichtkörpern (A, A') (wovon mindestens einer nach dem erfindungsgemäßen Verfahren hergestellt wurde), die durch eine anionenleitende Membran (B) getrennt wurden. Die Elektrolytversorgung (1M KOH, 60 °C) erfolgte über je einen Strömungs-/ und Stromverteiler (C), die beide über Dichtungen (D) elektrisch isoliert wurden.

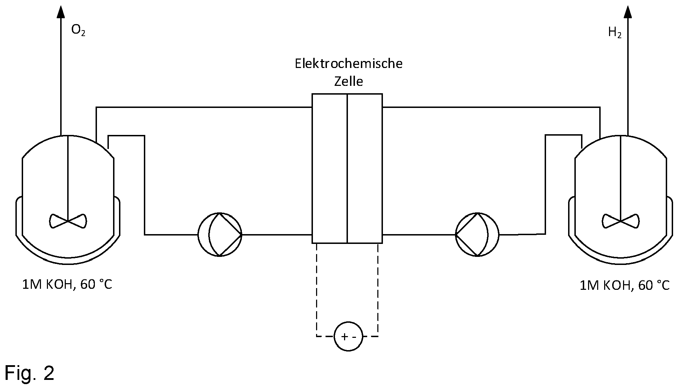

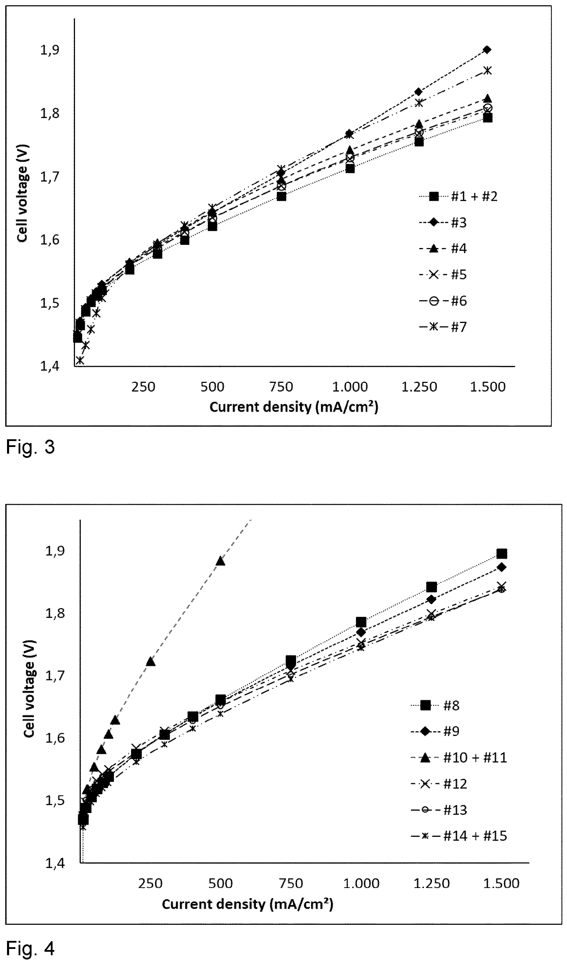

Die Funktion der hergestellten Schichtkörper konnte in der genannten Zelle in einem Teststand (Figur 2) anhand typischer Strom-Spannungs-Kurven (galvanostatisch: 0,02 - 1,50 A/cm²) gezeigt werden, was die Diagramme in Figur 3 und Figur 4 zeigen.

Grundsätzlich können die auf Grundlage der beschriebenen Katalysator-Ionomer-Formulierungen (Dispersionen) hergestellten Katalysatorschichten auch in anderen elektrochemischen Prozessen als in der alkalischen Membran-Wasserelektrolyse (AEM-WE) angewendet werden - Beispiele hierzu sind eine alkalische Brennstoffzelle oder der Elektrolyse (Reduktion) von Kohlendioxid.

**Tabelle 1 Zusammensetzung von Dispersionen**

| **Beispiel** | **lonomer-Lösung** | **Massenverhältnis** | | **Dispersionsmittel** | | **katalytisch aktive Substanz** | **Feststoff** | **Dispergieren** | **Substrat** | **Elektrochemisch aktive Substanz auf Substrat** |
|---|---|---|---|---|---|---|---|---|---|---|
| **#** | **Konzentration lonomer in DMSO [mg/ml]** | **Partikel** | **lonomer** | **Anteil Wasser** | **Anteil Ethanol** | **Bezeichnung** | **Konzentration [mg/ml]** | **Technologie** | **Bezeichnung** | **Beladung [mg/cm²]** |
| 1 | 50 | 3 | 1 | 1 | 1 | Pt/C | 11 | Ultraschall | Vlies: Kohlenstoff | 0,6 |
| 2 | 50 | 4 | 1 | 1 | 1 | Ir | 11 | Ultraschall | Vlies: Edelstahl | 1,0 |
| 3 | 50 | 4 | 1 | 1 | 1 | IrOx | 11 | Ultraschall | Vlies: Kohlenstoff | 1,1 |
| 4 | 50 | 3 | 1 | 1 | 1 | Ir | 11 | Ultraschall | Vlies: Edelstahl | 0,9 |
| 5 | 50 | 6 | 1 | 1 | 1 | Ir | 11 | Ultraschall | Vlies: Edelstahl | 1,0 |
| 6 | 50 | 9 | 1 | 1 | 1 | Ir | 11 | Ultraschall | Vlies: Edelstahl | 1,0 |
| 7 | 50 | 4 | 1 | 1 | 1 | PbRuOx | 11 | Ultraschall | Vlies: Edelstahl | 1,0 |
| 8 | 50 | 4 | 1 | 1 | 1 | NiOx | 11 | Ultraschall | Vlies: Edelstahl | 0,9 |
| 9 | 50 | 4 | 1 | 1 | 1 | CoOx | 11 | Ultraschall | Vlies: Edelstahl | 0,9 |
| 10 | 27,5 | 13 | 1 | 1 | 1 | Pt/C | 27 | Ultraschall | Vlies: Kohlenstoff | 0,2 |
| 11 | 27,5 | 13 | 1 | 1 | 1 | IrOx | 27 | Ultraschall | Vlies: Kohlenstoff | 1,6 |
| 12 | 50 | 3 | 1 | 1 | 1 | Pt/C | 11 | Ultraschall | Membran | 0,6 |
| 13 | 50 | 4 | 1 | 1 | 1 | Ir | 11 | Ultraschall | Membran | 1,0 |
| 14 | 50 | 3 | 1 | 1 | 1 | Pt/C | 11 | ULTRA-TURRAX^{®} | Vlies: Kohlenstoff | 0,7 |
| 15 | 50 | 4 | 1 | 1 | 1 | Ir | 11 | ULTRA-TURRAX^{®} | Vlies: Edelstahl | 1,0 |

## Patentansprüche

1. Dispersion, welche zumindest die folgenden Komponenten enthält:
• eine Lösung eines anionenleitfähigen Polymers;
• Partikeln enthaltend mindestens eine elektrokatalytisch aktive Substanz;
• optional mindestens ein Dispersionsmittel;
**dadurch gekennzeichnet,**
**dass** das anionenleitfähige Polymer mindestens eine Struktur enthält, welche ausgewählt ist aus der Gruppe bestehend aus den Strukturformeln (I), (II) und (III): 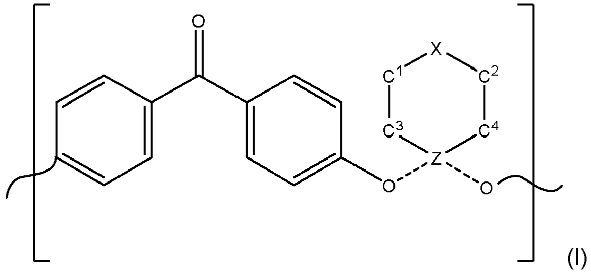 wobei in (I) X für ein Strukturelement steht, umfassend ein positiv geladenes Stickstoffatom, welches an C¹ und C² gebunden ist und das über zwei Bindungen an ein oder zwei Kohlenwasserstoffreste gebunden ist, umfassend 1 bis 12, vorzugsweise 1 bis 6, besonders bevorzugt 1 oder 5 Kohlenstoffatome
und wobei in (I) Z für ein Strukturelement steht, das ein Kohlenstoffatom umfasst, welches an C³ und C⁴ gebunden ist, und das mindestens einen aromatischen Sechsring umfasst, der direkt an eines der Sauerstoffatome gebunden ist, wobei die aromatischen Sechsringe durch ein oder mehrere Halogen- und/oder ein oder mehrere C₁- bis C₄-Alkylreste substituiert sein können; 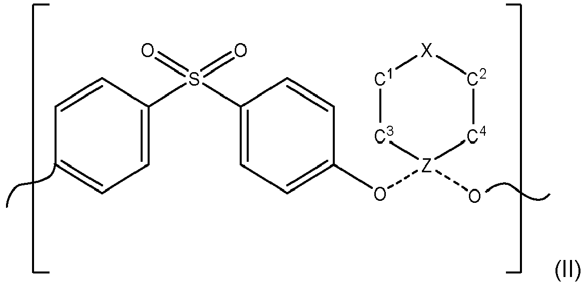 wobei in (II) X für ein Strukturelement steht, umfassend ein postitiv geladenes Stickstoffatom, welches an C¹ und C² gebunden ist und das über zwei Bindungen an ein oder zwei Kohlenwasserstoffreste gebunden ist, umfassend 1 bis 12, vorzugsweise 1 bis 6, besonders bevorzugt 1 oder 5 Kohlenstoffatome,
und wobei in (II) Z für ein Strukturelement steht, das ein Kohlenstoffatom umfasst, welches an C³ und C⁴ gebunden ist, und das mindestens einen aromatischen Sechsring umfasst, der direkt an eines der Sauerstoffatome gebunden ist, wobei der aromatische Sechsring in den Postionen 3 und 5 mit derselben oder verschiedenen C₁- bis C₄-Alkylreste substituiert sein kann, insbesondere mit einer Methyl-, iso-Propyl- oder tert-Butyl-Gruppe, wobei die Methylgruppe bevorzugt ist; 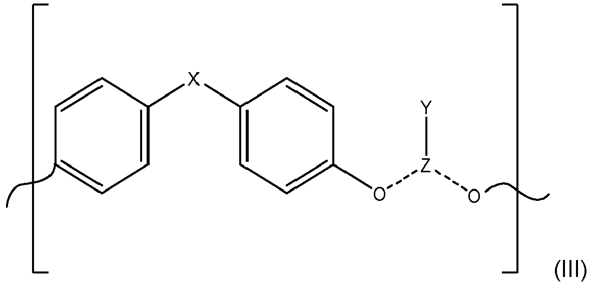 wobei in (III) X für eine Keton- oder Sulfon-Gruppe steht;
wobei in (III) Z für Strukturelement steht, welches mindestens ein tertiäres Kohlenstoffatom und mindestens einen aromatisches Sechsring umfasst, wobei der aromatische Sechsring mit einem der beiden Sauerstoffatome direkt verbunden ist;
und wobei in (III) Y für ein Strukturelement steht, welches mindesten ein Stickstoffatom mit positiver Ladung umfasst, wobei dieses Stickstoffatom mit dem Strukturelement Z verbunden ist.

2. Dispersion nach Anspruch 1, **dadurch gekennzeichnet, dass** die Lösung des anionenleitfähigen Polymers zumindest ein Lösemittel enthält, welches ausgewählt ist aus der Gruppe bestehend aus N-Methyl-2-pyrrolidon (NMP), N,N-Dimethylformamid (DMF), N,N-Dimethylacetamid (DMAC) oder Dimethylsulfoxid (DMSO), und dass die Konzentration des anionenleitfähigen Polymers bezogen auf das Volumen des Lösemittels zwischen 10 mg/ml und 500 mg/ml oder zwischen 50 mg/ml und 100 mg/ml beträgt.

3. Dispersion nach Anspruch 1 oder 2, **dadurch gekennzeichnet, dass** die Partikel mindestens eine elektrokatalytisch aktive Substanz enthalten, welche ausgewählt ist aus der Gruppe bestehend aus Iridium (Ir), Iridiumoxid (IrOx), Nickeloxid (NiOx), Cobaltoxid (CoOx), Nickel-Eisen-Mischoxid (NiFeOx), Nickel-Cobalt-Mischoxid (NiCoOx), Blei-Ruthenium-Mischoxid (PbRuOx), Platin auf Kohlenstoff (Pt/C) und dass das Massenverhältnis von anionenleitendem Polymer zu Partikel in der Dispersion zwischen 1:1 und 1:20 beträgt oder zwischen 1:1 und 1:5 oder zwischen 1:6 und 1:10.

4. Dispersion nach Anspruch 3, **dadurch gekennzeichnet, dass** das anionenleitende Polymer durch mindestens eine der folgenden Strukturformeln (IVa) bis (IVd) beschrieben ist: 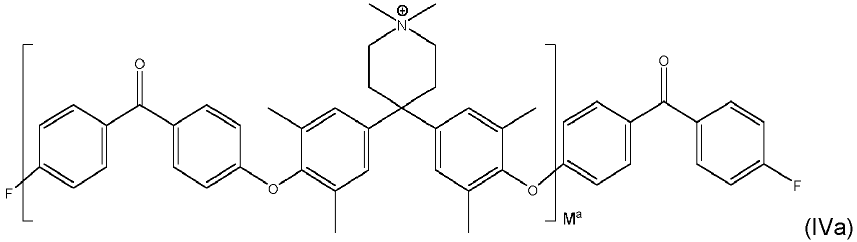 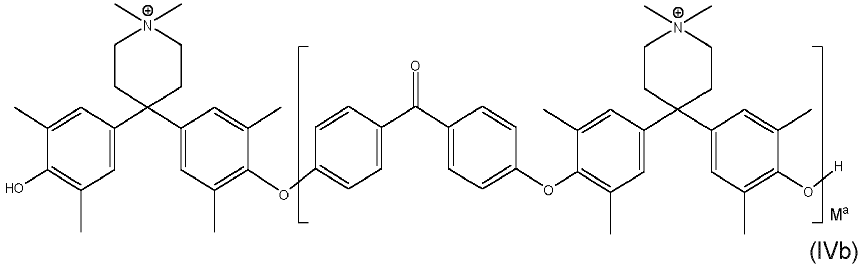 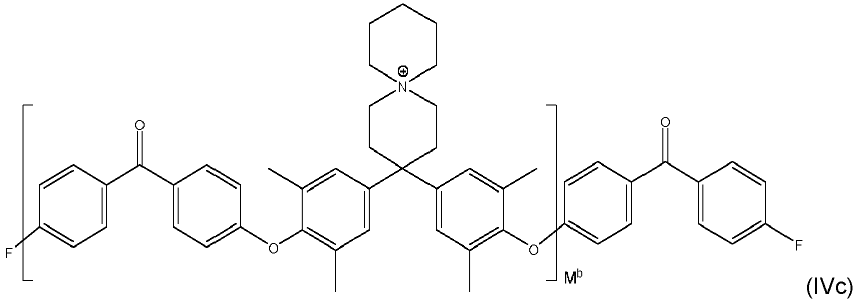 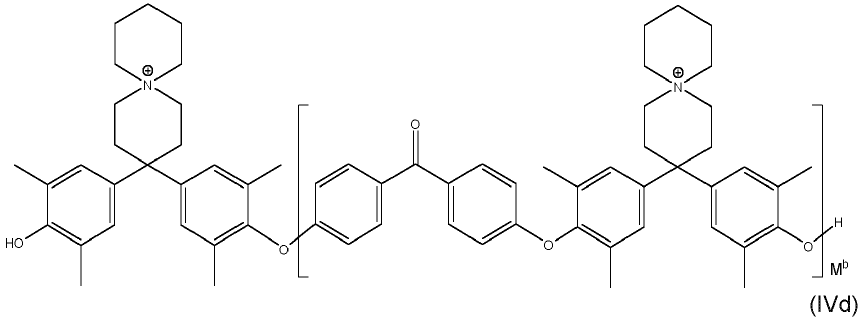 wobei M^{a} und M^{b} eine natürliche Zahl von 1 bis 500 oder von 5 bis 250 darstellen, und wobei die aromatischen Ringe weiter substituiert sein können mit einem oder mehr Halogenen und/oder mit einem oder mehreren C₁- to C₄- Alkyl-Resten, insbesondere mit Methyl-Resten.

5. Dispersion nach Anspruch 4, enthaltend zwei Dispersionsmittel, nämlich Wasser und einen Alkohol, wobei das Volumenverhältnis des Wassers zu dem Alkohol zwischen 1:3 und 3:1 beträgt.

6. Dispersion nach einem der Ansprüche 2 bis 5, **gekennzeichnet durch** eine Feststoffkonzentration von 5 mg/ml bis 100 mg/ml oder zwischen 10 mg/ml und 25 mg/ml, jeweils bezogen auf das Gesamtvolumen der flüssigen Bestandteile der Dispersion.

7. Verfahren zur Herstellung eines elektrochemisch aktiven Schichtkörpers, umfassend die folgenden Schritte:
a) Bereitstellen einer Dispersion nach einem der Ansprüche 1 bis 6, welche zumindest die folgenden Komponenten enthält:
• eine Lösung eines anionenleitfähigen Polymers;
• Partikeln enthaltend mindestens eine elektrokatalytisch aktive Substanz;
b) Bereitstellen eines Substrats;
c) Auftragen der Dispersion auf das Substrat;
d) Trocknen der auf dem Substrat aufgetragenen Dispersion;
e) Erhalt eines Schichtkörpers, umfassend das Substrat und eine darauf aufgebrachte, zumindest zweiphasige Beschichtung, wobei die Beschichtung als erste Phase das anionenleitfähige Polymer und als zweite Phase die Partikel umfasst und wobei die zweite Phase in der ersten Phase dispergiert ist.

8. Verfahren nach Anspruch 7, **dadurch gekennzeichnet, dass** das Auftragen durch Rakeln, durch Sprühen oder durch Siebdruck erfolgt.

9. Verfahren nach Anspruch 7 oder 8, **dadurch gekennzeichnet, dass** es sich bei dem Substrat um ein textiles Flächengebilde handelt, welches aus Fasern aus Nickel, Kohlenstoff oder Stahl aufgebaut ist.

10. Verfahren nach Anspruch 7 oder 8, **dadurch gekennzeichnet, dass** es sich bei dem Substrat um eine Membran aus einem anionenleitenden Polymer handelt.

11. Elektrochemisch aktiver Schichtkörper, umfassend ein Substrat und eine darauf aufgebrachte, zumindest zweiphasige Beschichtung, wobei die Beschichtung als erste Phase ein anionenleitfähiges Polymer und als zweite Phase Partikel enthaltend eine elektrokatalytisch aktive Substanz umfasst, und wobei die zweite Phase in der ersten Phase dispergiert ist,
**dadurch gekennzeichnet,**
**dass** das anionenleitfähige Polymer mindestens eine Struktur enthält, welche ausgewählt ist aus der Gruppe bestehend aus den Strukturformeln (I), (II) und (III): 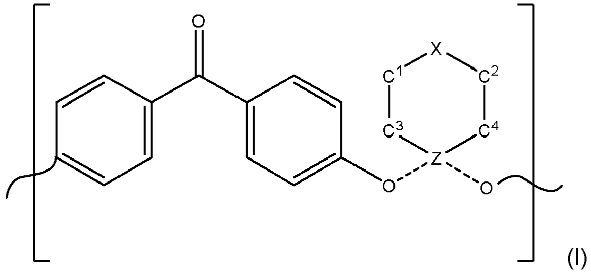 wobei in (I) X für ein Strukturelement steht, umfassend ein postitiv geladenes Stickstoffatom, welches an C¹ und C² gebunden ist und das über zwei Bindungen an ein oder zwei Kohlenwasserstoffreste gebunden ist, umfassend 1 bis 12, vorzugsweise 1 bis 6, besonders bevorzugt 1 oder 5 Kohlenstoffatome
und wobei in (I) Z für ein Strukturelement steht, das ein Kohlenstoffatom umfasst, welches an C³ und C⁴ gebunden ist, und das mindestens einen aromatischen Sechsring umfasst, der direkt an eines der Sauerstoffatome gebunden ist, wobei die aromatischen Sechsringe durch ein oder mehrere Halogen- und/oder ein oder mehrere C₁- bis C₄-Alkylreste substituiert sein können; 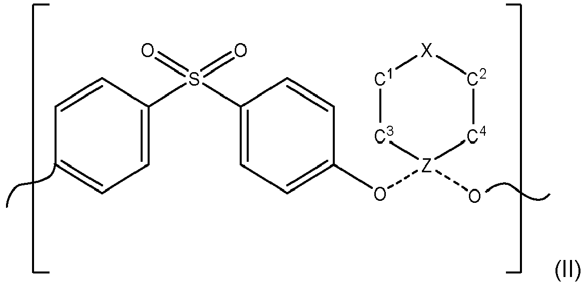 wobei in (II) X für ein Strukturelement steht, umfassend ein postitiv geladenes Stickstoffatom, welches an C¹ und C² gebunden ist und das über zwei Bindungen an ein oder zwei Kohlenwasserstoffreste gebunden ist, umfassend 1 bis 12, vorzugsweise 1 bis 6, besonders bevorzugt 1 oder 5 Kohlenstoffatome,
und wobei in (II) Z für ein Strukturelement steht, das ein Kohlenstoffatom umfasst, welches an C³ und C⁴ gebunden ist, und das mindestens einen aromatischen Sechsring umfasst, der direkt an eines der Sauerstoffatome gebunden ist, wobei der aromatische Sechsring in den Postionen 3 und 5 mit derselben oder verschiedenen C₁- bis C₄-Alkylreste substituiert sein kann, insbesondere mit einer Methyl-, iso-Propyl- oder tert-Butyl-Gruppe, wobei die Methylgruppe bevorzugt ist; 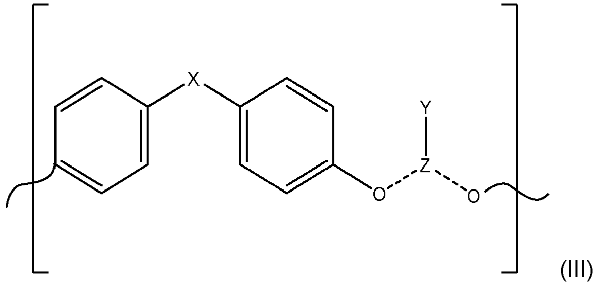 wobei in (III) X für eine Keton- oder Sulfon-Gruppe steht;
wobei in (III) Z für Strukturelement steht, welches mindestens ein tertiäres Kohlenstoffatom und mindestens einen aromatisches Sechsring umfasst, wobei der aromatische Sechsring mit einem der beiden Sauerstoffatome direkt verbunden ist;
und wobei in (III) Y für ein Strukturelement steht, welches mindesten ein Stickstoffatom mit positiver Ladung umfasst, wobei dieses Stickstoffatom mit dem Strukturelement Z verbunden ist.

12. Elektrochemisch aktiver Schichtkörper nach Anspruch 11, **dadurch gekennzeichnet, dass** das anionenleitende Polymer durch mindestens eine der folgenden Strukturformeln (IVa) bis (IVd) beschrieben ist: 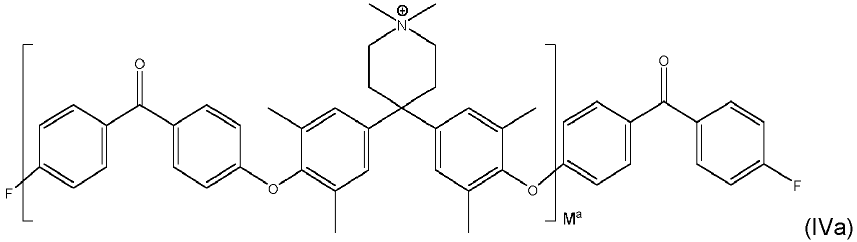 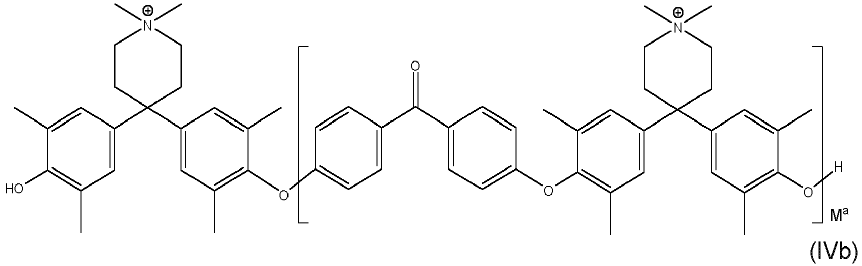 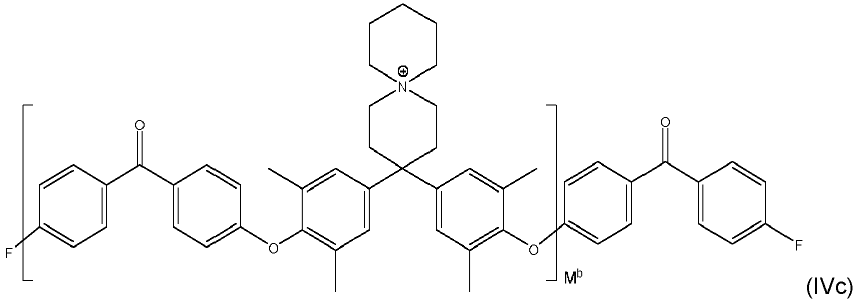 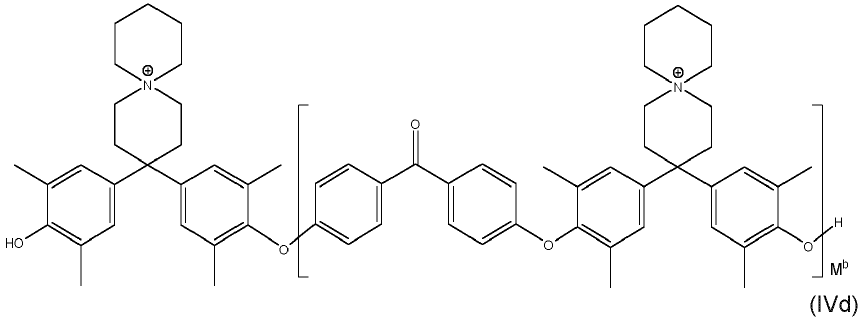 wobei M^{a} und M^{b} eine natürliche Zahl von 1 bis 500 darstellen, vorzugsweise von 5 bis 250 und wobei die aromatischen Ringe weiter substituiert sein können mit einem oder mehr Halogenen und/oder mit einem oder mehreren C₁- to C₄- Alkyl-Resten, insbesondere mit Methyl-Resten.

13. Elektrochemisch aktiver Schichtkörper nach Anspruch 11 oder 12, erhalten durch ein Verfahren nach einem der Ansprüche 7, 8 oder 9.

14. Elektrochemische Zelle umfassend mindestens einen elektrochemisch aktiven Schichtkörper nach Anspruch 11 oder 12 oder 13.

15. Verfahren zur Herstellung von Wasserstoff und Sauerstoff durch elektrochemische Spaltung von Wasser, bei welchem ein wässriger Elektrolyt mit einem pH-Wert von 7 bis 15 in eine elektrochemische Zelle nach Anspruch 14 gefüllt wird.
